# EUROPÄISCHE PATENTANMELDUNG

(11) **EP 4 755 653 A1**
(43) Veröffentlichungstag der Anmeldung: **10.06.2026**
(21) Anmeldenummer: 25220975.4
(22) Anmeldetag: 05.12.2025
(51) Int. Cl.: B41M 5/26

(54) **LASERMARKIEREN VON OBJEKTEN**

(30) Priorität: 05.12.2024 DE 102024136397
(71) Anmelder: Krones AG, 93073 Neutraubling (DE)
(72) Erfinder: WINTER, Ute, 93073 Neutraubling (DE); KRAUS, Andreas, 93073 Neutraubling (DE)
(74) Vertreter: v. Bezold & Partner Patentanwälte - PartG mbB

(57) **Zusammenfassung**

Die Erfindung betrifft u.a. ein Verfahren zum Lasermarkieren von Objekten (12), vorzugsweise Behältern. Das Verfahren weist auf: Bereitstellen einer Darstellung (D) einer gewünschten Lasermarkierung; Anwenden einer computergestützten Prozedur auf die Darstellung (D), der die Darstellung (D) in mehrere Teilbereiche (T1 - T5) aufteilt; und Lasermarkieren der mehreren Teilbereiche (T1-T5) auf ein Objekt (12) mittels mehrerer Lasermarkierungsvorrichtungen (20) zum Erzeugen der Darstellung (D) auf dem Objekt (12), wobei die mehreren Lasermarkierungsvorrichtungen (20) jeweils einen der mehreren Teilbereiche (T1 - T5) auf das Objekt (12) lasermarkieren.

## Beschreibung

### Technisches Gebiet

Die Erfindung betrifft Verfahren zum Lasermarkieren von Objekten und ein System zum Lasermarkieren von Objekten.

### Technischer Hintergrund

Herkömmlich werden Behälter mehrheitlich mit Etiketten ausgestattet. Typische Varianten sind Papier- oder Kunststoffetiketten, welche mit Heiß- oder Kaltleim oder auch selbstklebend verarbeitet und auf die Behälter aufgebracht werden.

Etiketten können im Recyclingprozess problematisch sein, z. B. wegen der verwendeten Drucktinte, wasserfeste Papiere, Leim usw. Im Rahmen der weltweit zunehmenden Nachhaltigkeitsdiskussionen können hierbei verschiedene Technologie-inhärente Merkmale als nachteilig angesehen werden. Dazu können insbesondere die Verwendung von Kunststoffen zur Behälterdekoration, ein schlechter CO2-Footprint bei der Etikettenherstellung (v.a. Kunststoffe) über Logistik bis hin zur Applikation (v.a. Schrumpfsleeves) und eine eingeschränkte Recyclebarkeit in den üblichen Abfallströmen zählen. Analoge Punkte lassen sich auch bei den Direktbedruckungsverfahren nennen.

Im Prinzip ist es daher wünschenswert, komplett auf Etiketten zu verzichten. Erforderliche Informationen könnten bspw. direkt über ein Lasermarkierungssystem auf die Behälter markiert bzw. geschrieben werden. Eine solche Technik wird bspw. bereits zum Lasermarkieren einer Produktionsnummer oder eines Mindesthaltbarkeitsdatums genutzt. Beim Lasermarkieren kann durch den Laserstrahl und die damit auf der Oberfläche des Behälters entstehende Wärme eine physikalische Veränderung der Oberfläche des Behälters bewirkt werden (z. B. Weißbruch bei PET-Behältern), sodass gewünschte Zeichen auf die Oberfläche lasermarkiert werden können.

Beispielsweise offenbart die GB 2576220 A eine Lasermarkierungsvorrichtung zum Markieren von Behältern.

Die aktuell eingesetzten Laser sind leistungsbegrenzt. In Kombination mit den Anforderungen von bspw. Hochleistungs-Abfüllanlagen ist daher denkbar, mehrere Laser einzusetzen. Jedoch bringt der Einsatz mehrerer Laser bestimmte Schwierigkeiten mit sich, die hierin behandelt werden.

Der Erfindung liegt die Aufgabe zu Grunde, eine verbesserte Technik zum Lasermarkieren von Objekten, bevorzugt Behältern, zu schaffen. Die Technik ist vorzugsweise im Hochleistungsbereich einsetzbar und ermöglicht dennoch die Erzeugung optisch ansprechende Lasermarkierungen auf den Objekten.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft ein Verfahren zum Lasermarkieren (z. B. mittels eines Systems wie hierin offenbart) von Objekten, vorzugsweise Behältern. Das Verfahren weist auf:
- Bereitstellen einer (z. B. zweidimensionalen) Darstellung (z. B. als Bilddatei) einer gewünschten Lasermarkierung (z. B. in einem Speicher einer Verarbeitungseinrichtung);
- Anwenden einer computergestützten Prozedur, vorzugsweise Algorithmus (z. B. Berechnungsalgorithmus; z. B. im Sinne einer Handlungsvorschrift) auf die Darstellung (z. B. mittels einer Verarbeitungseinrichtung), der die Darstellung in mehrere Teilbereiche (z. B. als Bilddateien) aufteilt; und
- Lasermarkieren der mehreren Teilbereiche auf ein Objekt mittels mehrerer Lasermarkierungsvorrichtungen zum Erzeugen der Darstellung auf dem Objekt, wobei die mehreren Lasermarkierungsvorrichtungen jeweils (nur) einen der mehreren Teilbereiche auf das Objekt lasermarkieren.

Mit dem vorgeschlagenen Verfahren wird ermöglicht, dass eine zu lasermarkierende Darstellung automatisch in Teilbereiche nach vorgegebenen Kriterien und Randbedingungen aufgeteilt wird, die dann jeweils von unterschiedlichen Lasermarkierungsvorrichtungen nacheinander, zeitlich überlappend oder gleichzeitig auf das jeweilige Objekt lasermarkiert werden. Die Nutzung der Prozedur ermöglicht dabei, dass nicht auf Basis von manuellen, subjektiven Entscheidungen die Teilbereiche gebildet werden, sondern nachvollziehbar, wiederholbar und optimiert durch eine Verarbeitungseinrichtung. Somit kann die Darstellung auf intelligente Art und Weise in die Teilbereiche getrennt / aufgeteilt werden. Die Prozedur kann zu einer möglichst optimalen Lösung bei der Aufteilung der Teilebereiche führen, bei der bspw. eine je Teilbereich optimierte Markierzeit, eine im Wesentlichen gleiche Markierzeiten für aller Lasermarkierungsvorrichtungen und eine grafische Erzeugung sinniger und optisch ansprechender Trennstellen / Trennzonen zwischen den Teilbereichen erreicht werden kann. Im Ergebnis kann bspw. die eingesetzte Lasertechnik optimal ausgenutzt werden, da annähernd gleiche Markierzeiten je Lasermarkierungsvorrichtung ermöglicht werden. Zudem können optisch unmerkliche / auffällige Nahtstellen zwischen den Teilbereichen durch cleveres Aufteilen und anschließendes Zusammensetzen (Stitching) beim letztendlichen Lasermarkieren erreicht werden. So kann eine Lasermarkierung ermöglicht werden, die auch bei toleranzbedingten Positionierungenauigkeiten der Lasermarkierungsvorrichtungen weiterhin optisch ansprechend und bspw. lesbar ist. Dadurch können sich Systemvereinfachung ergeben, da Systemtoleranzen aus Substratbewegung/Positionierung optisch weniger auffallen bzw. das System mit größeren Toleranzen ausgestaltet sein kann.

In einem Ausführungsbeispiel ist mindestens eines erfüllt von:
- die mehreren Teilbereiche überlappen einander nicht bzw. die Prozedur teilt die Darstellung so auf, dass die mehreren Teilbereiche einander nicht überlappen;
- die mehreren Teilbereiche grenzen aneinander bzw. die Prozedur teilt die Darstellung so auf, dass die mehreren Teilbereiche aneinander angrenzen;
- die mehreren Teilbereiche ergeben zusammen die Darstellung (z. B. nebeneinandergelegt (z. B. bei Vektorgrafik) oder übereinandergelegt (z. B. bei Rastergrafik)) bzw. die Prozedur teilt die Darstellung so auf, dass die mehreren Teilbereiche zusammen die Darstellung ergeben;
- die mehreren Teilbereiche weisen eine im Wesentlichen gleiche Zeichenanzahl auf; und
- die mehreren Teilbereiche weisen eine im Wesentlichen gleiche Bearbeitungszeit (z. B. Summe aus Markierzeit und Sprungzeit) auf;
- eine Trennlinie zwischen den mehreren Teilbereichen weist mehrere zueinander angewinkelte, vorzugsweise geradlinige, Linienabschnitte auf.

In einem weiteren Ausführungsbeispiel ist mindestens eines erfüllt von:
- die mehreren Teilbereiche sind zum Verringern (z. B. Minimieren oder Verhindern) von teilbereichsübergreifenden Darstellungselementen (z. B. Linie, Zeichen) gebildet (bzw. die Prozedur teilt die Darstellung so auf, dass die mehreren Teilbereiche zum Verringern von teilbereichsübergreifenden Darstellungselementen gebildet sind); und
- die mehreren Teilbereiche sind zum optischen Verringern von toleranzbedingten Positionierungenauigkeiten an Übergängen zwischen den mehreren Teilbereichen beim Lasermarkieren der mehreren Teilbereiche gebildet (bzw. die Prozedur teilt die Darstellung so auf, dass die mehreren Teilbereiche und Übergänge zwischen den mehreren Teilbereichen zum optischen Verringern von toleranzbedingten Positionierungenauigkeiten beim Lasermarkieren der Teilbereiche gebildet sind).

Vorteilhaft kann damit ein optischer Gesamteindruck der Lasermarkierung auch bei toleranzbedingten Ungenauigkeiten verbessert und damit bspw. insgesamt größere Toleranzen in Kauf genommen werden, wodurch bspw. eine Systemvereinfachung und/oder Leistungserhöhung ermöglicht werden kann.

Vorzugsweise können die mehreren Teilbereiche zum Verringern von teilbereichsrelevanten Abweichungen von einem Fokus (z. B. der mehrerer Lasermarkierungsvorrichtungen) gebildet sein.

In einer Ausführungsform weist das Anwenden der Prozedur auf:
- Erkennen einer oder mehrerer potentieller Trennzonen (z. B. in Punktform oder in Linienform) in der Darstellung, die mindestens ein vorgegebenes Trennkriterium der Prozedur erfüllt oder erfüllen, wobei die Prozedur die Darstellung in die mehreren Teilbereiche abhängig von der mindestens einen erkannten potentiellen Trennzonen aufteilt, vorzugsweise derart, dass die Darstellung an mindestens einer der erkannten potentiellen Trennzonen aufgeteilt wird (z. B. in zwei oder mehr Teilbereiche).

Vorteilhaft können die Trennzonen bzw. Nahtstellen zwischen den Teilbereichen somit derart gebildet werden, dass damit ein optischer Gesamteindruck der Lasermarkierung auch bei toleranzbedingten Ungenauigkeiten verbessert kann, mit den bereits erläuterten weiteren Vorteilen.

In einer weiteren Ausführungsform weist das mindestens eine vorgegebene Trennkriterium mindestens eines auf von:
- ein Leerzonen-Trennkriterium, das erfüllt ist, wenn eine darstellungselementfreie Zone der Darstellung vorliegt;
- ein Unstetigkeit-Trennkriterium, das erfüllt ist, wenn ein unstetiger, vorzugsweise angewinkelter, Linienübergang in der Darstellung vorliegt;
- ein Dichte-Trennkriterium, das erfüllt ist, wenn eine Zone der Darstellung relativ zu anderen Zonen der Darstellung eine geringere Punktdichte und/oder eine geringere Liniendichte aufweist und/oder absolut eine Punktdichte und/oder Liniendichte aufweist, die kleiner als ein vorgegebener Grenzwert ist;
- ein Syntax-Trennkriterium, das erfüllt ist, wenn ein Abstand zwischen Zeichenfolgen aus jeweils zusammenhängenden Zeichen vorliegt;
- ein Zeichenanzahl-Trennkriterium, das zwischen Bereichen der Darstellung mit einer jeweils im Wesentlichen gleichen Zeichenanzahl erfüllt ist; und
- ein Bearbeitungszeit-Synchronisierung-Trennkriterium, das zwischen Bereichen der Darstellung mit einer jeweils im Wesentlichen gleichen Bearbeitungszeit (z. B. Summe aus Markierzeit und Sprungzeit) erfüllt ist.

Denkbar ist in diesem Zusammenhang auch, dass ein vorbestimmtes Preprocessing der Darstellung durchgeführt wird, bei der potentielle Trennzonen gezielt in der Darstellung erzeugt werden könen.

In einer Ausführungsvariante weist das Anwenden der Prozedur auf:
- Erkennen einer oder mehrerer Verbundzonen in der Darstellung, die mindestens ein vorgegebenes Verbundkriterium der Prozedur erfüllt oder erfüllen, wobei die Prozedur die Darstellung in die mehreren Teilbereiche abhängig von der mindestens einen erkannten Verbundzone aufteilt, vorzugsweise derart, dass die Darstellung in mindestens einer der erkannten Verbundzonen nicht aufgeteilt wird.

Vorteilhaft können die Teilbereichen somit derart gebildet werden, dass keine oder kaum optisch nicht ansprechende Trennstellen der Lasermarkierung bei toleranzbedingten Ungenauigkeiten auftreten, mit den bereits erläuterten weiteren Vorteilen.

In einer weiteren Ausführungsvariante weist das mindestens eine vorgegebene Verbundkriterium mindestens eines auf von:
- ein Füllzonen-Verbundkriterium, das erfüllt ist, wenn eine darstellungselementgefüllte Zone der Darstellung vorliegt;
- ein Stetigkeit-Verbundkriterium, das erfüllt ist, wenn ein stetiger Linienübergang in der Darstellung vorliegt;
- ein Dichte-Verbundkriterium, das erfüllt ist, wenn eine Zone der Darstellung relativ zu anderen Zonen der Darstellung eine höhere Punktdichte und/oder eine höhere Liniendichte aufweist und/oder absolut eine Punktdichte und/oder Liniendichte aufweist, die größer als ein vorgegebener Grenzwert ist; und
- ein Syntax-Verbundkriterium, das erfüllt ist, wenn eine Zeichenfolge aus zusammenhängenden Zeichen vorliegt;
- ein Code-Verbundkriterium, das erfüllt ist, wenn ein visueller Code (z. B. QR-Code, Barcode, Aztec Code, Data Matrix, PDF417, AR-Code usw.) aus zusammenhängenden Code-Elementen vorliegt;
- ein Bearbeitungszeit-Verbundkriterium, das erfüllt ist, wenn eine Aufteilung in Teilbereiche aufgrund einer unter einem Grenzwert liegenden (also ausreichenden) Gesamtbearbeitungszeit unnötig ist.

Es ist möglich, dass mehrere vorgegebene Trennstellenkriterien und/oder mehrere vorgegebene Verbundkriterien in der Prozedur umfasst sind, die vorzugsweise:
- zumindest teilweise unterschiedlich gewichtet oder gewichtbar sind; und/oder
- in einer vorgegebenen Reihenfolge in der Prozedur berücksichtigt werden; und/oder
- beim Anwenden der Prozedur selektiv auswählbar sind (z. B. mittels einer Benutzerschnittstelle).

In einem Ausführungsbeispiel ist mindestens eines erfüllt von:
- die Prozedur teilt die Darstellung in die mehreren Teilbereiche abhängig von einer vorgegebenen Maximalmarkiergeschwindigkeit (Maximalschreibgeschwindigkeit) der mehreren Lasermarkierungsvorrichtungen und/oder einer vorgegebenen Maximalsprunggeschwindigkeit der mehreren Lasermarkierungsvorrichtungen auf; und
- die Prozedur teilt die Darstellung in die mehreren Teilbereiche derart auf, dass Markierdauern der mehreren Lasermarkierungsvorrichtungen zum Lasermarkieren des jeweiligen Teilbereichs im Wesentlichen gleich sind.

Vorteilhaft kann damit ermöglicht werden, dass die eingesetzte Lasertechnik optimal ausgenutzt wird, da annähernd gleiche Markierzeiten je Lasermarkierungsvorrichtung ermöglicht werden.

In einem weiteren Ausführungsbeispiel weist das Verfahren ferner auf:
- Fördern des Objekts mittels eines (z. B. Rundläufer-) Objektförderers (z. B. Behälterförderers) während des Lasermarkierens.

Vorzugsweise kann die Prozedur die Darstellung in die mehreren Teilbereiche abhängig von einer, vorzugsweise vorgegebenen oder vorgebbaren, Fördergeschwindigkeit des Objektförderers aufteilen; und/oder von einem (z. b. vorgegebenen) Objektabstand benachbarter Objekte, die von dem Objektförderer gefördert werden, aufteilen; und/oder von einem Gesamtbewegungsprofil (z. B. Vortriebbewegung und/oder Rotation um jeweils eigene Objekthochachse) der Objekte beim Fördern, aufteilen.

Vorteilhaft kann auf diese Weise eine Konfiguration gefunden werden, die ein optimales Zusammenspiel mit dem Objektförderer ermöglicht.

In einer Ausführungsform schätzt (näherungsweise Ermitteln) die Prozedur eine Gesamtmarkierdauer der Darstellung abhängig von einer Maximalmarkiergeschwindigkeit der mehreren Lasermarkierungsvorrichtungen. Optional kann beim Schätzen ferner eine Maximalsprunggeschwindigkeit der mehreren Lasermarkierungsvorrichtungen und/oder einer Fördergeschwindigkeit eines Objektförderers und/oder eine Soll-Ausstoßleistung (gewünschte Ausstoßleistung) der mehreren Lasermarkierungsvorrichtungen berücksichtigt werden. Die geschätzte Gesamtmarkierdauer kann bspw. durch eine Anzahl der mehreren Lasermarkierungsvorrichtungen zum Errechnen einer Einzelmarkierdauer geteilt werden. Vorzugweise können die mehreren Teilbereiche abhängig von der errechneten Einzelmarkierdauer gebildet werden.

Vorteilhaft kann damit ermöglicht werden, dass annähernd gleiche Markierzeiten je Lasermarkierungsvorrichtung ermöglicht werden.

In einer weiteren Ausführungsform kann die Prozedur eine erforderliche Anzahl der mehreren Lasermarkierungsvorrichtungen zum Lasermarkieren der mehreren Teilbereiche abhängig von der Darstellung (z. B. Größe, Form, Inhalt, Anzahl an Darstellungselemente, Punktdichte und/oder Liniendichte) und einer Maximalmarkiergeschwindigkeit der mehreren Lasermarkierungsvorrichtungen (und optional einer Maximalsprunggeschwindigkeit der mehreren Lasermarkierungsvorrichtungen) und optional einer Objektfördergeschwindigkeit eines Objektförderers und/oder einer (z. B. vorgegebenen oder vorgebbaren) Einzelmarkierdauer für die mehreren Lasermarkierungsvorrichtungen errechnen und (z. B. über eine Benutzerschnittstelle) ausgeben.

Vorteilhaft kann diese Technik bspw. beim initialen Zusammenstellen des gesamten Systems genutzt werden oder wenn bspw. gewünscht ist, dass eine Darstellung mit einer minimalen Anzahl von Lasermarkierungsvorrichtungen lasermarkiert wird und etwaig übrige Lasermarkierungsvorrichtungen in Reserve bleiben bzw. temporär geschont werden.

In einer Ausführungsvariante ist die Darstellung eine Rastergrafik. Die Prozedur kann die Rastergrafik derart in die mehreren Teilbereiche aufteilen, dass die mehreren Teilbereiche jeweils durch mehrere Darstellungspunkte der Rastergrafik gebildet sind, die verteilt über die gesamte Rastergrafik angeordnet sind und sich von den mehreren Darstellungspunkten der jeweils anderen Teilbereiche unterscheiden. Vorzugsweise kann dann ein (z. B. bündiges) Übereinanderlegen der mehreren Teilbereiche die Rastergrafik ergeben.

In einer Ausführungsvariante ist die Darstellung eine Vektorgrafik oder eine Rastergrafik. Die Prozedur kann die Vektorgrafik oder Rastergrafik derart in die mehreren Teilbereiche aufteilen, dass die mehreren Teilbereiche sich jeweils nur über einen Teil der Vektorgrafik oder Rastergrafik erstrecken und/oder jeweils im Wesentlichen durch miteinander zusammenhängende Darstellungselemente der Vektorgrafik oder Rastergrafik gebildet sind. Vorzugsweise kann dann ein Nebeneinanderlegen der mehreren Teilbereiche die Vektorgrafik oder Rastergrafik ergeben.

In einem Ausführungsbeispiel ist die Prozedur eine Kl-Prozedur. Vorzugsweise kann die KI-Prozedur mittels Eingabe von Darstellungen und jeweils zugehörigen aufgeteilten Teilbereichen trainiert werden. Alternativ oder zusätzlich kann die KI-Prozedur mittels Eingabe der oder einer (weiteren) Darstellung, der zugehörig aufgeteilten (weiteren) Teilbereiche und eines mittels einer, vorzugsweise kameragestützten, Sensorvorrichtung erfassten Ergebnisses des Lasermarkierens der mehreren (weiteren) Teilbereiche auf das Objekt trainiert werden. Vorteilhaft kann damit ein Programmieraufwand für die Prozedur verringert und eine selbstlernende Prozedur geschaffen werden.

Ein weiterer Aspekt betrifft ein System zum Lasermarkieren von Objekten (z. B. Behältern). Das System weist eine Verarbeitungseinrichtung auf, die dazu konfiguriert ist, eine computergestützte Prozedur (z. B. wie hierin offenbart), vorzugsweise Algorithmus, auf eine bereitgestellte (z. B. zweidimensionale) Darstellung (z. B. Bilddatei) anzuwenden, der die Darstellung in mehrere Teilbereiche aufteilt. Das System weist ferner mehrere Lasermarkierungsvorrichtungen auf, die dazu ausgebildet sind, die von der Verarbeitungseinrichtung aufgeteilten mehreren Teilbereiche zu empfangen und auf das Objekt zum Erzeugen der Darstellung auf dem Objekt zu lasermarkieren, wobei die mehreren Lasermarkierungsvorrichtungen jeweils (nur) einen der mehreren Teilbereiche auf das Objekt lasermarkieren und vorzugsweise empfangen. Optional kann das System ferner einen (z. B. Rundläufer-) Objektförderer (z. B. Behälterförderer) aufweisen, der zum Fördern der Objekte entlang der mehreren Lasermarkierungsvorrichtungen angeordnet ist.

Vorteilhaft können mit dem System die gleichen Vorteile erzielt werden, die bereits unter Bezugnahme auf das Verfahren erläutert wurden.

Es versteht sich, dass alle unter Bezugnahme auf das Verfahren erläuterten Merkmale auch in Bezug auf das System offenbart und beanspruchbar sind, und umgekehrt.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann das System wie hierin offenbart aufweisen. Die Behälterbehandlungsanlage kann beispielsweise eine Getränkeabfüllanlage sein.

Beispielsweise können die Behälter als Flaschen, Dosen, Kanister, Kartons, Flakons, Tuben usw. ausgeführt sein.

Vorzugsweise kann sich der Begriff "Steuereinrichtung" und/oder "Verarbeitungsvorrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Verarbeitungsvorrichtung kann beispielsweise eine Zentralverarbeitungsvorrichtung sein oder mehrere dezentral bzw. verteilt angeordnete Verarbeitungseinheiten aufweisen.

Ein weiterer Aspekt betrifft ein Computerprogrammprodukt aufweisend (z. B. mindestens ein computerlesbares Speichermedium mit darauf gespeicherten) Anweisungen, die eine Rechenvorrichtung veranlassen, eine Prozedur wie hierin offenbart auszuführen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines Systems gemäß einem Ausführungsbeispiel;
- Figur 2: ein Flussdiagramm eines Verfahrens zum Lasermarkieren von Objekten gemäß einem Ausführungsbeispiel;
- Figur 3: eine Aufteilung einer Darstellung in mehrere Teilbereiche;
- Figur 4: eine Aufteilung einer Darstellung in mehrere Teilbereiche;
- Figur 5: eine Aufteilung einer Darstellung in mehrere Teilbereiche;
- Figur 6: eine Aufteilung einer Darstellung in mehrere Teilbereiche;
- Figur 7: denkbare Lasermarkierungen bei einer toleranzbedingten Positionierungenauigkeit der Lasermarkierungsvorrichtungen, die die mehreren Teilbereiche nach Figur 6 lasermarkieren;
- Figur 8: eine Aufteilung einer Darstellung in mehrere Teilbereiche; und
- Figur 9: eine denkbare Lasermarkierung bei einer toleranzbedingten Positionierungenauigkeit der Lasermarkierungsvorrichtungen, die die mehreren Teilbereiche nach Figur 8 lasermarkieren.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

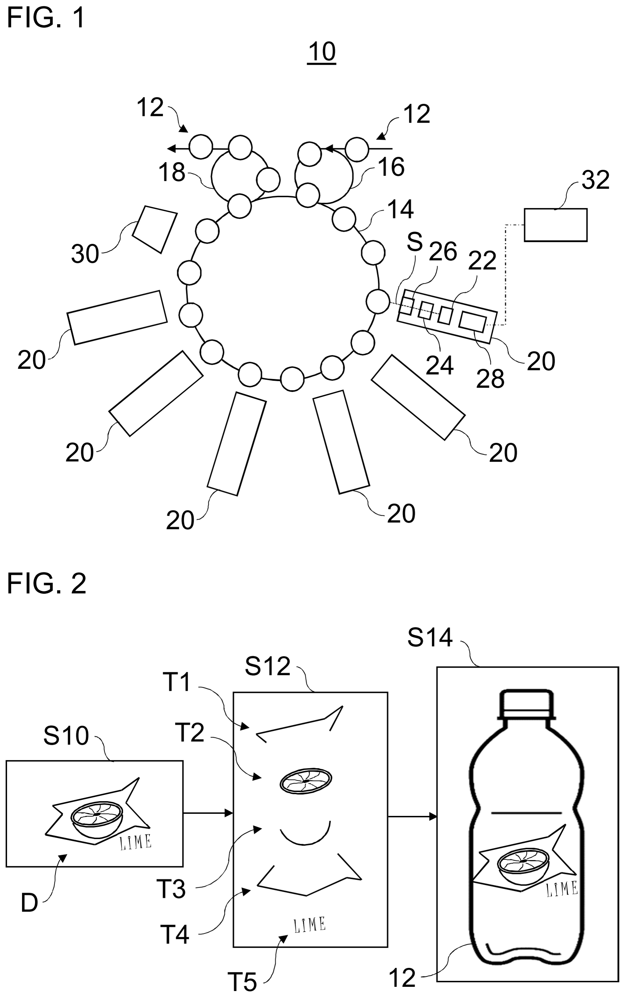

Die Figur 1 zeigt ein System 10 zum Lasermarkieren von Objekten 12. Bevorzugt sind die Objekte 12 als Behälter ausgeführt. Vorzugsweise kann das System 10 in einer Behälterbehandlungsanlage, z. B. Getränkeabfüllanlage, umfasst bzw. angeordnet sein.

Das System 10 weist mehrere Lasermarkierungsvorrichtungen 20 und eine Verarbeitungseinrichtung 32 auf. Bevorzugt kann das System 10 ferner einen Objektförderer 14 und/oder eine Sensorvorrichtung 30 aufweisen.

Der Objektförderer 14 kann die Objekte 12 transportieren. Bevorzugt ist der Objektförderer 14 einspurig. Vorzugsweise transportiert der Objektförderer 14 die Objekte 12 beabstandet voneinander, z. B. im Einzeltransport.

Der Objektförderer 14 ist bevorzugt zum Fördern der Objekte 12 entlang der Lasermarkierungsvorrichtungen 20 angeordnet. Beispielsweise können die Lasermarkierungsvorrichtungen 20 seitlich neben dem Objektförderer 14, z. B. innenliegend oder außenliegend davon, angeordnet sein.

Beispielsweise kann der Objektförderer 14 ein Rundläufer-Objektförderer (Objektfördererkarussell) sein, wie beispielhaft in Figur 1 dargestellt ist. Der Objektförderer 14 kann die Objekte 12 auf einer Kreisbahn transportieren.

Alternativ könnte der Objektförderer 14 beispielsweise ein Linear-Objektförderer sein. Der Linear-Objektförderer kann beispielsweise ein, vorzugsweise umlaufendes, Förderelement zum Transportieren der Objekte 12 aufweisen. Der Linear-Objektförderer kann beispielsweise ein Band-, Gurt-, Riemen-, Ketten- oder Plattenförderer sein. Es ist auch möglich, dass der Linear-Objektförderer als ein Langstator-Linearmotor-Objektförderer oder (magnetischer) Planarmotor-Antrieb-Objektförderer ausgeführt ist, der die Objekte 12 mittels Bewegungsvorrichtungen (mover, shuttle) unabhängig voneinander bewegen kann.

Der Objektförderer 14 kann die Objekte 12 beim Transportieren, vorzugsweise bodenseitig und/oder umfangsseitig und/oder von oben, abstützen. Der Objektförderer 14 kann Objekthalterungen zum Abstützen der Objekte 12 aufweisen. Die Objekthalterungen können die Objekte 12 vorzugsweise im Basehandling oder Neckhandling halten.

Beispielsweise können die Objekthalterungen jeweils ein Objekt 12 abstützen. Die Objekthalterungen können beispielsweise jeweils einen Behälterteller, eine Zentrierglocke, eine Behälterklammer und/oder eine Aufblasvorrichtung aufweisen.

Es ist möglich, dass der Objektförderer 14 dazu ausgebildet ist, die transportierten Objekte 12 jeweils um eine eigene Hochachse zu drehen. Vorzugsweise können die Objekthalterungen zum Drehen der Objekte 12 um deren jeweilige Hochachse drehbar sein.

Es ist auch möglich, dass der Objektförderer 14 keine gesonderten Objekthalterungen aufweist und bspw. die Objekte 12 einfach auf einem, vorzugsweise umlaufenden, Förderelement (z. B. Band, Gurt, Riemen, Ketten oder Platten) des Objektförderers 14 abgestützt sind.

Der Objektförderer 14 kann objektstromabwärts von einem Einlaufförderer 16 angeordnet sein. Der Einlaufförderer 14 kann bspw. ein Rundläufer-Objektförderer oder ein Linear-Objektförderer sein. Der Objektförderer 14 kann die von dem Einlaufförderer 16 transportierten Objekte 12 übernehmen.

Der Objektförderer 14 kann objektstromaufwärts von einem Auslaufförderer 18 angeordnet sein. Der Auslaufförderer 18 kann bspw. ein Rundläufer-Objektförderer oder ein Linear-Objektförderer sein. Der Objektförderer 14 kann die Objekte 12 (nach dem Lasermarkieren mittels der Lasermarkierungsvorrichtungen 20) an den Auslaufförderer 18 übergeben.

Die Lasermarkierungsvorrichtungen 20 können entlang des Objektförderers 14 angeordnet sein. Beispielsweise können die Lasermarkierungsvorrichtungen 20 nebeneinander bzw. hintereinander entlang des Objektförderers 14 angeordnet sein. Andere Anordnungen, z. B. zumindest teilweise übereinander und/oder auf beiden Längsseiten des Objektförderers 14, sind ebenfalls möglich. Die Lasermarkierungsvorrichtungen 20 können die Objekte 12 lasermarkieren, während die Objekte 12 von dem Objektförderer 14 entlang der Lasermarkierungsvorrichtungen 20 gefördert / transportiert werden.

Die Lasermarkierungsvorrichtungen 20 können auch als Laserkennzeichnungsvorrichtungen, Lasercodiervorrichtungen oder Laserbeschriftungsvorrichtungen bezeichnet werden. Bevorzugt können die Lasermarkierungsvorrichtungen 20 CO2-Lasermarkierungvorrichtungen, Faser-Lasermarkierungsvorrichtungen oder ein UV-Lasermarkierungsvorrichtungen sein.

Beispielsweise können die Lasermarkierungsvorrichtungen 20 jeweils eine Laserquelle 22, einen Markierkopf 24, eine Fokussieroptik 26 und/oder eine eigene Steuereinrichtung 28 aufweisen (aus Übersichtgründen in Figur 1 nur für eine der Lasermarkierrungsvorrichtungen 20 dargestellt).

Die Laserquelle 22 kann beispielsweise als eine Laserröhre ausgeführt sein. Die Laserröhre kann versiegelt sein. Die Laserröhre kann mit einem Gas, z. B. aufweisend CO2, oder Gasgemisch, z. B. CO2-N2-He-Gasgemisch, gefüllt sein. In der Laserröhre können ebenfalls Elektroden angeordnet sein. An die Elektroden kann eine Versorgungseinheit angeschlossen sein (nicht dargestellt in Figur 1). Die Versorgungseinheit kann die Laserquelle 22 mit elektrischer Energie versorgen. Mittels einer bspw. hochfrequenten Spannung können Moleküle, z. B. CO2-Moleküle, in der Laserröhre zum Schwingen und damit zum Aussenden eines Laserstrahls S angeregt werden. Die Laserquelle 22 kann auch als Oszillator bezeichnet werden.

Der von der Laserquelle 22 erzeugte Laserstrahl S kann direkt oder über Spiegel zu dem Markierkopf 24 geleitet oder gelenkt werden. Es ist möglich, dass zwischen der Laserquelle 22 und dem Markierkopf 24 beispielsweise ein sogenanntes Teleskop zum Aufweiten des Laserstrahls S angeordnet ist.

Der Markierkopf 24 kann auch als Codierkopf, Kennzeichnungskopf oder Schreibkopf bezeichnet werden. Der Markierkopf 24 kann vorzugsweise zwei bewegbare Spiegel sowie zwei Antriebe für die Spiegel aufweisen. Der erste Antrieb kann den ersten Spiegel um eine erste Achse (z. B. x-Achse) drehen. Der erste Spiegel kann bspw. auch als beweglicher Scanner-Spiegel, z. B. X-Scanner-Spiegel, bezeichnet werden. Der zweite Antrieb kann den zweiten Spiegel um eine zweite Achse (z. B. y-Achse) drehen. Der zweite Spiegel kann bspw. auch als beweglicher Scanner-Spiegel, z. B. Y-Scanner-Spiegel, bezeichnet werden. Die erste Achse und die zweite Achse können bevorzugt senkrecht zueinander verlaufen.

Die durch die Antriebe bewegten Spiegel können den Laserstrahl S entsprechend der aufzubringenden Lasermarkierung lenken. Der Laserstrahl S kann sich dadurch bspw. schreibend über die Oberfläche eines Objekts 12 bewegen.

Die Fokussieroptik 26 kann auch als Kondensor bzw. Kondensoroptik bezeichnet werden. Die Fokussieroptik 26 ist bevorzugt eine Planfeld-Fokussieroptik. Die Planfeld-Fokussieroptik kann eine planare Fokusebene vorgeben. Die Planfeld-Fokussieroptik kann beispielsweise ein F-Theta-Objektiv sein oder aufweisen. Bevor der Laserstrahl S auf die Oberfläche des Objekts 12 trifft, kann er mittels der Fokussieroptik 26 fokussiert werden.

Die Fokussieroptik 26 kann bspw. mit dem Markierkopf 24 integriert oder separat zu dem Markierkopf 24 angeordnet sein.

Die Steuereinrichtung 28 kann den Markierkopf 24 der jeweiligen Lasermarkierungsvorrichtung 20 zum Erzeugen einer Lasermarkierung auf einer Fläche des Objekts 12 betreiben.

Beispielsweise kann die Steuereinrichtung 28 einen Teilbereich einer zweidimensionale Darstellung (2D-Darstellung) einer gewünschten Lasermarkierung empfangen, z. B. von der Verarbeitungseinrichtung 32. Der Teilbereich der zweidimensionalen Darstellung kann bevorzugt in Form einer Bilddatei empfangen werden. Die zweidimensionale Darstellung und der Teilbereich davon können bspw. Vektorgrafiken oder Rastergrafiken sein.

Die Steuereinrichtungen 28 der Lasermarkierungsvorrichtungen 20 können unterschiedliche Teilbereiche der Darstellung der gewünschten Lasermarkierung empfangen. Gemeinsam (z. B. übereinandergelegt oder nebeneinandergelegt) können die Teilbereiche die (gesamte) Darstellung ergeben.

Bevorzugt kann die Steuereinrichtung 28 die Antriebe des Markierkopfes 24 abhängig von dem empfangenen Teilbereich der zweidimensionalen Darstellung betreiben. Beispielsweise kann die Steuereinrichtung 28 abhängig von dem empfangenen Teilbereich Bewegungsbefehle, wie Antriebssignale, für die Antriebe erzeugen, um die Lasermarkierung zu erzeugen.

Die Sensorvorrichtung 30 kann neben dem Objektförderer 14 oder bspw. objektstromabwärts davon angeordnet sein. Bezüglich eines Transportpfads der Objekte 12 durch das System 10 ist die Sensorvorrichtung 30 bevorzugt stromabwärts von den Lasermarkierungsvorrichtungen 20 angeordnet.

Die Sensorvorrichtung 30 kann bspw. auf den Objektförderer 14 bzw. auf die von dem Objektförderer 14 transportierten Objekte 12 gerichtet sein.

Die Sensorvorrichtung 30 kann bspw. eine Kameravorrichtung, eine LED-Erfassungsvorrichtung oder eine Lasererfassungsvorrichtung aufweisen.

Die Sensorvorrichtung 30 kann beispielsweise die Lasermarkierungen auf den Objekten 12 erfassen. Die erfassten Lasermarkierungen können vorzugsweise jeweils als eine Bilddatei erfasst werden.

Die Verarbeitungseinrichtung 32 kann bspw. ein PC oder ein Server sein. Alternativ kann die Verarbeitungseinrichtung 32 bspw. mit den Steuereinrichtungen 28 integriert sein.

Die Verarbeitungseinrichtung 32 kann bspw. mit den Steuereinrichtungen 28 der Lasermarkierungsvorrichtungen 20 in Kommunikationsverbindung stehen. Die Verarbeitungseinrichtung 32 kann Teilbereiche einer, vorzugsweise zweidimensionalen, Darstellung zum Lasermarkieren an die Steuereinrichtungen 28 senden.

Die Verarbeitungseinrichtung 32 ist zum Anwenden eine Prozedur auf die Darstellung der gewünschten Lasermarkierung zum Aufteilen der Darstellung in die mehreren Teilbereiche konfiguriert, wie hierin noch genauer und unter Bezugnahme auf Beispiele näher erläutert ist. Prinzipiell ist es möglich, dass die Prozedur zumindest teilweise in Hardware und/oder zumindest teilweise in Software umgesetzt ist.

Die Figur 2 zeigt schematisch ein Verfahren zum Lasermarkieren.

In einem Schritt S10 wird eine, vorzugsweise zweidimensionale, Darstellung D einer gewünschten Lasermarkierung bereitgestellt, z. B. als eine Bilddatei. Beispielsweise kann die Darstellung D mittels der Verarbeitungseinrichtung 32 bereitgestellt werden. Die Verarbeitungseinrichtung 32 kann die Darstellung D bspw. über eine Kommunikationsschnittstelle empfangen haben. Es ist auch möglich, dass die Darstellung D mittels der Verarbeitungseinrichtung 32 erstellt wird, z. B. durch Benutzereingabe.

In einem Schritt S12 wird eine computergestützte Prozedur, z. B. ein Algorithmus, auf die Darstellung D angewendet. Die Prozedur teilt die Darstellung D in mehrere Teilbereiche T1 - T5 auf. Die Teilbereiche T1-T5 liegen bevorzugt jeweils als Bilddateien vor. Bevorzugt kann die Verarbeitungseinrichtung 32 die Prozedur auf die Darstellung D anwenden.

Es versteht sich, dass eine Anzahl der Teilbereiche T1-T5 abhängig von der jeweiligen Darstellung D und der zur Verfügung stehenden Ausrüstung, insbesondere Lasermarkierungsvorrichtungen 20, unterschiedlich sein kann. Bevorzugt kann eine Anzahl der Teilbereiche T1 - T5 kleiner oder gleich eine Anzahl der Lasermarkierungsvorrichtungen 20 sein.

Die Prozedur kann die Darstellung D vorzugsweise so aufteilen, dass die Teilbereiche T1-T5 einander nicht überlappen. Die Teilbereiche T1 - T5 können bspw. aneinander angrenzen. Zusammen können die Teilbereiche T1-T5 die Darstellung D ergeben.

Sofern die Darstellung D bspw. im Wesentlichen aus Zeichen (z. B. Ziffern, Buchstaben usw.) aufgebaut ist, können die Teilbereiche T1-T5 bevorzugt so gebildet werden, dass diese eine im Wesentlichen gleiche Zeichenanzahl aufweisen, z. B mit einer Toleranz von ± 10 %, ± 15 % oder ± 20 %.

Besonders bevorzugt teilt die Prozedur die Darstellung D derart auf, dass die mehreren Teilbereiche T1-T5 zum Verringern von teilbereichsübergreifenden Darstellungselementen, wie Linien, Zeichen usw., gebildet sind. Die Teilbereiche T1 - T5 können so zum optischen Verringern von toleranzbedingten Positionierungenauigkeiten an Übergängen zwischen den mehreren Teilbereichen T1 - T5 beim Lasermarkieren der Teilbereiche T1 - T5 beitragen.

Vorzugsweise kann die Prozedur eine oder mehrere potentielle Trennzonen in der Darstellung D erkennen, die mindestens ein vorgegebenes Trennkriterium der Prozedur erfüllen. An einer oder mehreren der erkannten potentiellen Trennzonen kann die Darstellung D dann in die mehreren Teilbereiche T1 - T5 aufgeteilt werden, z. B. abhängig von weiteren Parametern, wie bspw. mindestens eines von Anzahl der Lasermarkierungsvorrichtungen 20, Maximalmarkiergeschwindigkeit der Lasermarkierungsvorrichtungen 20, Objektfördergeschwindigkeit des Objektförderers 14, usw.

Beispielsweise kann die Prozedur ein Leerzonen-Trennkriterium nutzen. Das Leerzonen-Trennkriterium kann erfüllt sein, wenn eine darstellungselementfreie Zone der Darstellung D vorliegt bzw. erkannt wird. Diese darstellungselementfreie Zone kann entsprechend als eine potentielle Trennzone erkannt werden.

Als weiteres Beispiel kann die Prozedur ein Unstetigkeit-Trennkriterium nutzen. Das Unstetigkeit-Trennkriterium kann erfüllt sein, wenn ein unstetiger, vorzugsweise angewinkelter, Linienübergang (mathematische Unstetigkeitsstelle) in der Darstellung D vorliegt. Dieser unstetige Linienübergang kann entsprechend als eine potentielle Trennzone erkannt werden.

Auch möglich ist, dass die Prozedur ein Dichte-Trennkriterium nutzt. Das Dichte-Trennkriterium ist erfüllt, wenn eine Zone der Darstellung D relativ zu anderen Zonen der Darstellung D eine geringere Punktdichte und/oder eine geringere Liniendichte aufweist. Diese Zone kann entsprechend als eine potentielle Trennzone erkannt werden. Dieses Kriterium kann alternativ oder zusätzlich bspw. als ein Absolutkriterium mit einem Grenzwert für die (Punkt-/Linien-) Dichte verwendet werden.

Ebenfalls möglich ist, dass die Prozedur ein Syntax-Trennkriterium nutzt. Das Syntax-Trennkriterium kann erfüllt sein, wenn ein Abstand zwischen Zeichenfolgen aus jeweils zusammenhängenden Zeichen vorliegt. Die Zone, in der der Abstand liegt, kann entsprechend als eine potentielle Trennzone erkannt werden.

Es ist auch möglich, dass bspw. ein Bearbeitungszeit-Synchronisierung-Trennkriterium genutzt wird. Dieses kann zwischen Bereichen der Darstellung mit einer jeweils im Wesentlichen gleichen (Laser-) Bearbeitungszeit erfüllt sein.

Während die oben genannten Trennkriterien darauf gerichtet sind, mögliche Grenzen bzw. Trennlinien / Nahtstellen zum Abgrenzen der zu bildenden Teilbereiche T1 - T5 zu finden, ist es alternativ oder zusätzlich bspw. möglich, dass die Prozedur eine oder mehrere Verbundzonen in der Darstellung D erkennt, die mindestens ein vorgegebenes Verbundkriterium der Prozedur erfüllen.

Die erkannten Verbundzonen können Zonen sein, in denen eine Aufteilung in die Teilbereiche T1-T5 nicht vorteilhaft ist, da sie bspw. schon bei kleinen toleranzbedingten Positionierungenauigkeiten beim Lasermarkieren zu einem schlechten visuellen Gesamteindruck führen oder eine Lesbarkeit der lasermarkierten Darstellung D deutlich verschlechtern. Entsprechend kann die Prozedur die Darstellung D in die Teilbereiche T1- T5 abhängig von der mindestens einen erkannten Verbundzone aufteilen, vorzugsweise derart, dass die Darstellung D in mindestens einer der erkannten Verbundzonen nicht aufgeteilt wird.

Beispielsweise kann die Prozedur ein Füllzonen-Verbundkriterium nutzen. Das Füllzonen-Verbundkriterium kann bspw. erfüllt ein, wenn eine darstellungselementgefüllte Zone der Darstellung D vorliegt bzw. erkannt wird. Darstellungselemente können bspw. Punkte, Linien, Zeichen usw. sein. Die darstellungselementgefüllte Zone kann entsprechend als eine Verbundzone erkannt werden.

Als weiteres Beispiel kann die Prozedur ein Stetigkeit-Verbundkriterium nutzen. Das Stetigkeit-Verbundkriterium kann erfüllt sein, wenn ein (mathematisch) stetiger Linienübergang in der Darstellung D vorliegt bzw. erkannt wird. Dieser stetige Linienübergang kann entsprechend als eine Verbundzone erkannt werden.

Auch möglich ist, dass die Prozedur ein Dichte-Verbundkriterium nutzt. Das Dichte-Verbundkriterium kann erfüllt sein, wenn eine Zone der Darstellung D relativ zu anderen Zonen der Darstellung D eine höhere Punktdichte und/oder eine höhere Liniendichte aufweist. Diese Zone kann entsprechend als eine Verbundzone erkannt werden. Dieses Kriterium kann alternativ oder zusätzlich bspw. als ein Absolutkriterium mit einem Grenzwert für die (Punkt-/Linien-) Dichte verwendet werden.

Ebenfalls möglich ist, dass die Prozedur ein Syntax-Verbundkriterium nutzt. Das Syntax-Verbundkriterium kann erfüllt sein, wenn eine Zeichenfolge aus zusammenhängenden Zeichen vorliegt bzw. erkannt wird (z. B. ein Wort oder ein Datum oder eine mehrstellige Zahl). Diese Zeichenfolge kann entsprechend als eine Verbundzone erkannt werden.

Es ist auch möglich, dass ein Code-Verbundkriterium genutzt, das erfüllt ist, wenn ein visueller Code (z. B. QR-Code, Barcode, Aztec Code, Data Matrix, PDF417, AR-Code usw.) aus zusammenhängenden Code-Elementen vorliegt.

Es ist ebenfalls möglich, dass ein Bearbeitungszeit-Verbundkriterium genutzt wird, das erfüllt ist, wenn eine Aufteilung in Teilbereiche aufgrund einer ausreichenden Gesamtbearbeitungszeit unnötig ist. Die Gesamtbearbeitungszeit kann bspw. kleiner als ein vorgegebener Grenzwert sein. Vorteilhaft kann somit auf eine Trennung verzichtet werden, wenn aus Zeitgründen oder Maschinenleistungsgründen gar nicht getrennt werden muss.

Es versteht sich, dass die Prozedur bevorzugt mehrere Trennstellenkriterien und/oder mehrere Verbundkriterien nutzt, um die Darstellung D ggf. abhängig von weiteren Parametern, wie bereits erwähnt, in die mehreren Teilbereiche T1-T5 aufzuteilen.

Sofern mehrere Kriterien genutzt werden, können diese bspw. zumindest teilweise unterschiedlich gewichtet sein, in einer vorgegebenen Reihenfolge in der Prozedur berücksichtigt werden und/oder beim Anwenden der Prozedur selektiv auswählbar sein.

Wie bereits erwähnt, kann die Prozedur die Darstellung D in die Teilbereiche T1- T5 abhängig von einer vorgegebenen Maximalmarkiergeschwindigkeit der Lasermarkierungsvorrichtungen 20 aufteilen. Optional kann bspw. noch eine vorgegebene Maximalsprunggeschwindigkeit der Lasermarkierungsvorrichtungen 20 berücksichtigt werden. Diese(r) Parameter können/kann von der Prozedur derart genutzt werden, dass die Darstellung D in die Teilbereiche T1-T5 derart aufgeteilt wird, dass Markierdauern der Lasermarkierungsvorrichtungen 20 zum Lasermarkieren des jeweiligen Teilbereichs T1 - T5 im Wesentlichen gleich sind. Anders ausgedrückt, jede Lasermarkierungsvorrichtung 20 benötigt in etwa die gleiche Markierdauer zum Lasermarkieren des jeweiligen Teilbereichs T1 - T5.

Wie ebenfalls bereits erwähnt, können die Objekte 12 während des Lasermarkierens von dem Objektförderer 14 gefördert werden. Vorzugsweise kann die Prozedur die Darstellung D in die Teilbereiche T1 - T5 abhängig von einer Fördergeschwindigkeit des Objektförderers 14 und/oder von einem (z. B. fest vorgegebenen) Objektabstand (Teilung) benachbarter Objekte 12, die von dem Objektförderer 14 gefördert werden, aufteilen.

Bevorzugt ist auch, dass die Prozedur eine Gesamtmarkierdauer der Darstellung D abhängig von einer Maximalmarkiergeschwindigkeit der Lasermarkierungsvorrichtungen 20 und optional einer Maximalsprunggeschwindigkeit der Lasermarkierungsvorrichtungen 20 schätzt (z. B. errechnet). Die geschätzte Gesamtmarkierdauer kann dann bspw. durch eine Anzahl der Lasermarkierungsvorrichtungen 20 zum Errechnen einer Einzelmarkierdauer geteilt werden. Die Teilbereiche T1 - T5 können dann bspw. abhängig von der errechneten Einzelmarkierdauer gebildet werden, vorzugsweise so, dass sich jeder Teilbereich T1 - T5 in etwa der errechneten Einzelmarkierdauer von einer Lasermarkierungsvorrichtung 20 lasermarkieren lässt.

Es ist auch möglich, dass die Prozedur eine erforderliche Anzahl der mehreren Lasermarkierungsvorrichtungen 20 zum Lasermarkieren der gesamten Darstellung D errechnet und bspw. über eine Benutzerschnittstelle des Systems 10 an einen Benutzer ausgibt. Beispielsweise kann die erforderliche Anzahl abhängig von der zu lasermarkierenden Darstellung D selbst und weiteren Parametern, wie bspw. eine Maximalmarkiergeschwindigkeit der Lasermarkierungsvorrichtungen 20, eine Maximalsprunggeschwindigkeit der Lasermarkierungsvorrichtungen 20, eine Objektfördergeschwindigkeit des Objektförderers 14 und/oder eine Einzelmarkierdauer für die Lasermarkierungsvorrichtungen 20, errechnet werden.

Es ist sogar möglich, die Prozedur als eine KI-Prozedur (Künstliche-Intelligenz-Prozedur) auszugestalten.

Beispielsweise kann die KI-Prozedur mittels Eingabe von Darstellungen D und jeweils zugehörigen manuell oder automatisch aufgeteilten Teilbereichen T1 - T5 trainiert werden, um zu lernen, wie eine Darstellung D optimal in mehrere Teilbereiche T1-T5 aufgeteilt werden kann.

Denkbar ist auch, dass die KI-Prozedur mittels Eingabe der Darstellung D, der aufgeteilten Teilbereiche T1-T5 und eines mittels der Sensorvorrichtung 30 (siehe Figur 1) erfassten Ergebnisses des Lasermarkierens der Darstellung D auf das Objekt 12 trainiert wird. So kann die KI-Prozedur bspw. lernen, wie Teilbereiche T1-T5 gebildet werden können, die tolerant bei Positionierungenauigkeiten der Lasermarkierungsvorrichtungen 20 sind.

In einem Schritt S14 werden schließlich die Teilbereiche T1-T5 mittels der mehreren Lasermarkierungsvorrichtungen 20 auf das Objekt 12 lasermarkiert, sodass sich letztlich wieder die gewünschte Lasermarkierung gemäß der Darstellung D auf dem Objekt 12 ergibt. Die mehreren Lasermarkierungsvorrichtungen 20 lasermarkieren dabei jeweils nur einen der mehreren Teilbereiche T1 - T5 auf das Objekt 12. Beispielsweise kann eine erste Lasermarkierungsvorrichtung 20 einen ersten Teilbereich T1 auf das Objekt 12 markieren, eine zweite Lasermarkierungsvorrichtung 20 kann einen zweiten Teilbereich T2 auf das Objekt 12 markieren, usw.

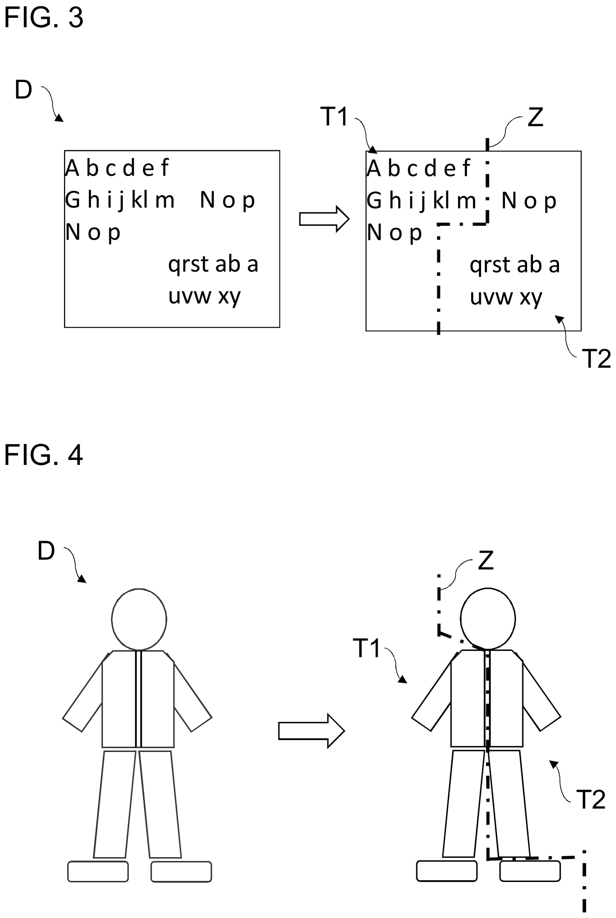

Die Figuren 3 bis 9 dienen zur Veranschaulichung beispielhafter Varianten der Prozedur und bevorzugter Kriterien der Prozedur.

In Figur 3 ist beispielhaft gezeigt, dass eine Darstellung D aus Zeichen, z. B. Textzeichen, in zwei Teilbereiche T1 und T2 für zwei Lasermarkierungsvorrichtungen 20 aufgeteilt werden kann.

Die längliche / linienförmige Trennzone Z kann die Prozedur bspw. unter Anwendung des Syntax-Trennkriteriums und/oder des Syntax-Verbundkriteriums erkennen. Die als Trennlinie geformte Trennzone Z zwischen den beiden Teilbereichen T1 und T2 kann mehrere zueinander angewinkelte, vorzugsweise geradlinige, Linienabschnitte aufweisen. Die beiden Teilbereiche T1 und T2 können vorteilhaft so gebildet sein, dass sie eine annähernd gleiche Markierdauer aufgrund einer im Wesentlichen gleichen Anzahl an Zeichen und ähnlichen Abständen zueinander benötigen.

In Figur 4 ist beispielhaft gezeigt, dass eine bildliche Darstellung D in zwei Teilbereiche T1, T2 für zwei Lasermarkierungsvorrichtungen 20 aufgeteilt werden kann.

Die Trennzone Z kann die Prozedur bspw. unter Anwendung des Leerzonen-Trennkriteriums, des Füllzonen-Verbundkriteriums, des Dichte-Trennkriteriums und/oder des Dichte-Verbundkriteriums erkennen. Die als Trennlinie geformte Trennzone Z zwischen den beiden Teilbereichen T1 und T2 kann wiederum mehrere zueinander angewinkelte, vorzugsweise geradlinige, Linienabschnitte aufweisen. Die beiden Teilbereiche T1 und T2 können vorteilhaft so gebildet sein, dass sie eine annähernd gleiche Markierdauer aufgrund einer im Wesentlichen gleichen Anzahl an Darstellungselementen benötigen.

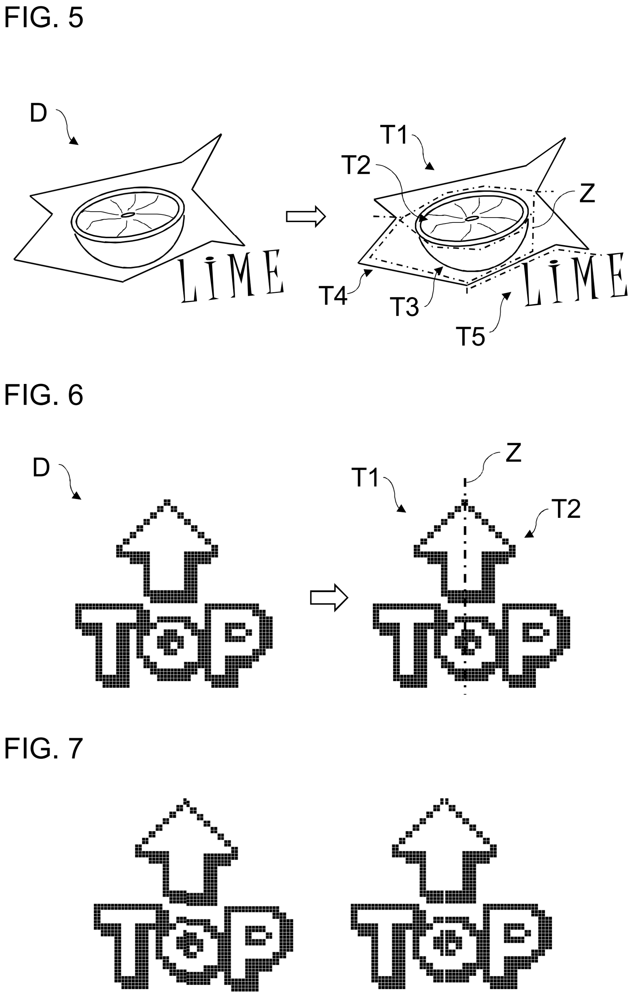

In Figur 5 ist beispielhaft gezeigt, dass eine bildliche Darstellung D in fünf Teilbereiche T1 - T5 für fünf Lasermarkierungsvorrichtungen 20 aufgeteilt werden kann.

Die bevorzugt linienförmigen Trennzonen Z kann die Prozedur unter Anwendung unterschiedlicher Kriterien erkennen. Beispielsweise kann die Trennzone Z zwischen den Teilbereichen T1 und T4 unter Nutzung des Unstetigkeit-Trennkriteriums und/oder des Stetigkeit-Verbundkriteriums erkannt werden. Beispielsweise können die Trennzonen Z zwischen den Teilbereichen T1 und T2, T2 und T3, T3 und T4 sowie T4 und T5 unter Anwendung des Leerzonen-Trennkriteriums und/oder des Füllzonen-Verbundkriteriums erkannt werden.

Wie aus den bisherigen Erläuterungen abgeleitet werden kann, werden bei Vektorgrafiken, wie bspw. der Darstellung D in den Figuren 4 und 5, die Teilbereiche T1 - T5 von der Prozedur vorzugsweise so gebildet, dass sich die Teilbereiche T1 - T5 jeweils nur über einen Teil der Vektorgrafik erstrecken und jeweils im Wesentlichen durch miteinander zusammenhängende Darstellungselemente der Vektorgrafik gebildet sind.

Dieses Vorgehen kann prinzipiell auch bei einer als Rastergrafik ausgeführten Darstellung D genutzt werden, wie in Figur 6 beispielhaft dargestellt ist. Hier kann die Prozedur unter Nutzung der erwähnten Kriterien die Darstellung D in zwei Teilbereiche T1 und T2 unterteilen, z. B. wie dargestellt ist oder auf andere Weise. Allerdings könnten, insbesondere bei der gezeigten Aufteilung in die Teilbereiche T1 und T2, Positionierungenauigkeiten der Lasermarkierungsvorrichtungen 20 dazu führen, dass ein optisch unschöner Gesamteindruck entsteht, wie für zwei unterschiedliche Beispiele (Versatz in y-Richtung und Versatz in x-Richtung) in Figur 7 beispielhaft dargestellt ist.

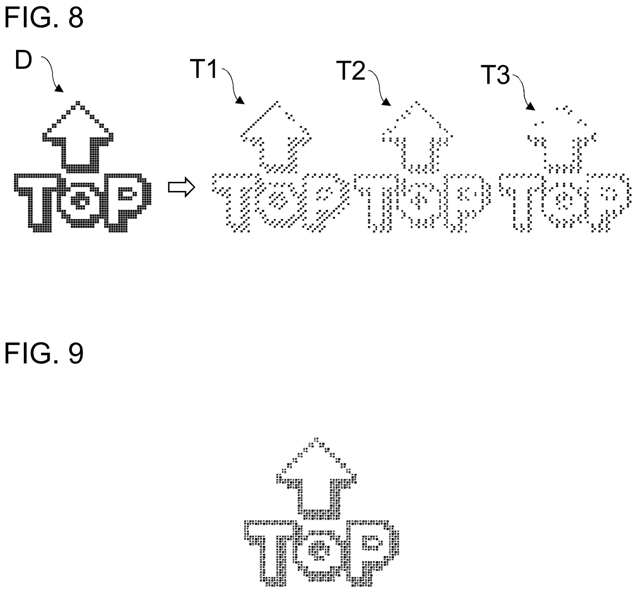

Wie in Figur 8 dargestellt ist, kann daher bevorzugt sein, wenn die Prozedur eine als Rastergrafik ausgeführte Darstellung D derart in Teilbereiche T1 - T3 aufteilt, dass die Teilbereiche T1 - T3 jeweils durch mehrere Darstellungspunkte der Rastergrafik gebildet sind. Die Darstellungspunkte der Teilbereiche T1 -T3 können jeweils verteilt über die gesamte Rastergrafik angeordnet sein und sich von den mehreren Darstellungspunkten der jeweils anderen Teilbereiche unterscheiden. Vorzugsweise kann dann ein (gedachtes) Übereinanderlegen der mehreren Teilbereiche T1- T3 wieder die Rastergrafik bzw. die Darstellung D ergeben.

Wie in Figur 9 dargestellt ist, kann eine auf diese Art und Weise lasermarkierte Darstellung unempfindlicher bzw. toleranter bei Positionierungenauigkeiten der Lasermarkierungsvorrichtungen 20 sein und weiterhin einen optisch ansprechenden Gesamteindruck vermitteln.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: System
- 12: Objekt
- 14: Objektförderer
- 16: Einlaufförderer
- 18: Auslaufförderer
- 20: Lasermarkierungsvorrichtung
- 22: Laserquelle
- 24: Markierkopf
- 26: Fokussieroptik
- 28: Steuereinrichtung
- 30: Sensorvorrichtung
- 32: Verarbeitungseinrichtung

- S: Laserstrahl
- S10-S14: Verfahrensschritte
- T1-T5: Teilbereich
- Z: Trennzone

## Patentansprüche

1. Verfahren zum Lasermarkieren von Objekten (12), vorzugsweise Behältern, wobei das Verfahren aufweist:
Bereitstellen einer Darstellung (D) einer gewünschten Lasermarkierung;
Anwenden einer computergestützten Prozedur, vorzugsweise Algorithmus, auf die Darstellung (D), die die Darstellung (D) in mehrere Teilbereiche (T1 - T5) aufteilt; und
Lasermarkieren der mehreren Teilbereiche (T1 - T5) auf ein Objekt (12) mittels mehrerer Lasermarkierungsvorrichtungen (20) zum Erzeugen der Darstellung (D) auf dem Objekt (12), wobei die mehreren Lasermarkierungsvorrichtungen (20) jeweils einen der mehreren Teilbereiche (T1 - T5) auf das Objekt (12) lasermarkieren.

2. Verfahren nach Anspruch 1, wobei mindestens eines erfüllt ist von:
die mehreren Teilbereiche (T1 - T5) überlappen einander nicht;
die mehreren Teilbereiche (T1 - T5) grenzen aneinander;
die mehreren Teilbereiche (T1 - T5) ergeben zusammen die Darstellung (D);
die mehreren Teilbereiche (T1 - T5) weisen eine im Wesentlichen gleiche Zeichenanzahl auf;
die mehreren Teilbereiche (T1 - T5) weisen eine im Wesentlichen gleiche Bearbeitungszeit auf; und
eine Trennlinie zwischen den mehreren Teilbereichen (T1 - T5) weist mehrere zueinander angewinkelte, vorzugsweise geradlinige, Linienabschnitte auf.

3. Verfahren nach Anspruch 1 oder Anspruch 2, wobei mindestens eines erfüllt ist von:
die mehreren Teilbereiche (T1 - T5) sind zum Verringern von teilbereichsübergreifenden Darstellungselementen gebildet;
die mehreren Teilbereiche (T1 - T5) sind zum optischen Verringern von toleranzbedingten Positionierungenauigkeiten an Übergängen zwischen den mehreren Teilbereichen (T1 - T5) beim Lasermarkieren der mehreren Teilbereiche (T1 - T5) gebildet.

4. Verfahren nach einem der vorherigen Ansprüche, wobei das Anwenden der Prozedur aufweist:
Erkennen einer oder mehrerer potentieller Trennzonen (Z) in der Darstellung (D), die mindestens ein vorgegebenes Trennkriterium der Prozedur erfüllt oder erfüllen, wobei:
die Prozedur die Darstellung (D) in die mehreren Teilbereiche (T1 - T5) abhängig von der mindestens einen erkannten potentiellen Trennzonen (Z) aufteilt, vorzugsweise derart, dass die Darstellung (D) an mindestens einer der erkannten potentiellen Trennzonen (Z) aufgeteilt wird.

5. Verfahren nach Anspruch 4, wobei das mindestens eine vorgegebene Trennkriterium mindestens eines aufweist von:
ein Leerzonen-Trennkriterium, das erfüllt ist, wenn eine darstellungselementfreie Zone der Darstellung (D) vorliegt;
ein Unstetigkeit-Trennkriterium, das erfüllt ist, wenn ein unstetiger, vorzugsweise angewinkelter, Linienübergang in der Darstellung (D) vorliegt;
ein Dichte-Trennkriterium, das erfüllt ist, wenn eine Zone der Darstellung (D) relativ zu anderen Zonen der Darstellung (D) eine geringere Punktdichte und/oder eine geringere Liniendichte aufweist und/oder absolut eine Punktdichte und/oder Liniendichte aufweist, die kleiner als ein vorgegebener Grenzwert ist;
ein Syntax-Trennkriterium, das erfüllt ist, wenn ein Abstand zwischen Zeichenfolgen aus jeweils zusammenhängenden Zeichen vorliegt;
ein Zeichenanzahl-Trennkriterium, das zwischen Bereichen der Darstellung (D) mit einer jeweils im Wesentlichen gleichen Zeichenanzahl erfüllt ist; und
ein Bearbeitungszeit-Synchronisierung-Trennkriterium, das zwischen Bereichen der Darstellung mit einer jeweils im Wesentlichen gleichen Bearbeitungszeit erfüllt ist.

6. Verfahren nach einem der vorherigen Ansprüche, wobei das Anwenden der Prozedur aufweist:
Erkennen einer oder mehrerer Verbundzonen in der Darstellung (D), die mindestens ein vorgegebenes Verbundkriterium der Prozedur erfüllt oder erfüllen,
wobei:
die Prozedur die Darstellung (D) in die mehreren Teilbereiche (T1 - T5) abhängig von der mindestens einen erkannten Verbundzone aufteilt, vorzugsweise derart, dass die Darstellung (D) in mindestens einer der erkannten Verbundzonen nicht aufgeteilt wird.

7. Verfahren nach Anspruch 6, wobei das mindestens eine vorgegebene Verbundkriterium mindestens eines aufweist von:
ein Füllzonen-Verbundkriterium, das erfüllt ist, wenn eine darstellungselementgefüllte Zone der Darstellung (D) vorliegt;
ein Stetigkeit-Verbundkriterium, das erfüllt ist, wenn ein stetiger Linienübergang in der Darstellung (D) vorliegt;
ein Dichte-Verbundkriterium, das erfüllt ist, wenn eine Zone der Darstellung (D) relativ zu anderen Zonen der Darstellung (D) eine höhere Punktdichte und/oder eine höhere Liniendichte aufweist und/oder absolut eine Punktdichte und/oder Liniendichte aufweist, die größer als ein vorgegebener Grenzwert ist;
ein Syntax-Verbundkriterium, das erfüllt ist, wenn eine Zeichenfolge aus zusammenhängenden Zeichen vorliegt;
ein Code-Verbundkriterium, das erfüllt ist, wenn ein visueller Code aus zusammenhängenden Code-Elementen vorliegt; und
ein Bearbeitungszeit-Verbundkriterium, das erfüllt ist, wenn eine Aufteilung in Teilbereiche aufgrund einer unter einem Grenzwert liegenden Gesamtbearbeitungszeit unnötig ist.

8. Verfahren nach einem der vorherigen Ansprüche, wobei mindestens eines erfüllt ist von:
die Prozedur teilt die Darstellung (D) in die mehreren Teilbereiche (T1 - T5) abhängig von einer vorgegebenen Maximalmarkiergeschwindigkeit der mehreren Lasermarkierungsvorrichtungen (20) und/oder einer vorgegebenen Maximalsprunggeschwindigkeit der mehreren Lasermarkierungsvorrichtungen (20) auf; und
die Prozedur teilt die Darstellung (D) in die mehreren Teilbereiche (T1 - T5) derart auf, dass Markierdauern der mehreren Lasermarkierungsvorrichtungen (20) zum Lasermarkieren des jeweiligen Teilbereichs (T1 - T5) im Wesentlichen gleich sind.

9. Verfahren nach einem der vorherigen Ansprüche, wobei das Verfahren ferner aufweist:
Fördern des Objekts (12) mittels eines Objektförderers (14) während des Lasermarkierens, wobei vorzugsweise:
die Prozedur die Darstellung (D) in die mehreren Teilbereiche (T1 - T5) abhängig von mindestens eines von aufteilt:
- eine, vorzugsweise vorgegebene oder vorgebbare, Fördergeschwindigkeit des Objektförderers (14);
- ein Objektabstand benachbarter Objekte (12), die von dem Objektförderer (14) gefördert werden;
- ein Gesamtbewegungsprofil der Objekte (12) beim Fördern.

10. Verfahren nach einem der vorherigen Ansprüche, wobei:
die Prozedur eine Gesamtmarkierdauer der Darstellung (D) abhängig von einer Maximalmarkiergeschwindigkeit der mehreren Lasermarkierungsvorrichtungen (20) und optional einer Maximalsprunggeschwindigkeit der mehreren Lasermarkierungsvorrichtungen (20) und/oder einer Fördergeschwindigkeit eines Objektförderers (14) und/oder einer Soll-Ausstoßleistung der mehreren Lasermarkierungsvorrichtungen (20) schätzt;
die geschätzte Gesamtmarkierdauer durch eine Anzahl der mehreren Lasermarkierungsvorrichtungen (20) zum Errechnen einer Einzelmarkierdauer teilt; und
die mehreren Teilbereiche (T1 - T5) abhängig von der errechneten Einzelmarkierdauer gebildet werden.

11. Verfahren nach einem der vorherigen Ansprüche, wobei:
die Prozedur eine erforderliche Anzahl der mehreren Lasermarkierungsvorrichtungen (20) zum Lasermarkieren der mehreren Teilbereiche (T1 - T5) abhängig von der Darstellung (D) und einer Maximalmarkiergeschwindigkeit der mehreren Lasermarkierungsvorrichtungen (20) und optional einer Objektfördergeschwindigkeit eines Objektförderers (14) und/oder einer Einzelmarkierdauer für die mehreren Lasermarkierungsvorrichtungen (20) errechnet und ausgibt.

12. Verfahren nach einem der vorherigen Ansprüche, wobei:
die Darstellung (D) eine Rastergrafik ist; und
die Prozedur die Rastergrafik derart in die mehreren Teilbereiche (T1 - T5) aufteilt, dass die mehreren Teilbereiche (T1 - T5) jeweils durch mehrere Darstellungspunkte der Rastergrafik gebildet sind, die verteilt über die gesamte Rastergrafik angeordnet sind und sich von den mehreren Darstellungspunkten der jeweils anderen Teilbereiche (T1 - T5) unterscheiden,
wobei vorzugsweise ein Übereinanderlegen der mehreren Teilbereiche (T1 - T5) die Rastergrafik ergibt.

13. Verfahren nach einem der Ansprüche 1 bis 11, wobei:
die Darstellung (D) eine Vektorgrafik oder Rastergrafik ist; und
die Prozedur die Vektorgrafik oder Rastergrafik derart in die mehreren Teilbereiche (T1 - T5) aufteilt, dass die mehreren Teilbereiche (T1 - T5) sich jeweils nur über einen Teil der Vektorgrafik oder Rastergrafik erstrecken und/oder jeweils im Wesentlichen durch miteinander zusammenhängende Darstellungselemente der Vektorgrafik oder Rastergrafik gebildet sind,
wobei vorzugsweise:
ein Nebeneinanderlegen der mehreren Teilbereiche (T1 - T5) die Vektorgrafik oder Rastergrafik ergibt.

14. Verfahren nach einem der vorherigen Ansprüche, wobei:
die Prozedur eine KI-Prozedur ist,
wobei vorzugsweise:
die KI-Prozedur mittels Eingabe von Darstellungen (D) und jeweils zugehörigen aufgeteilten Teilbereichen (T1 - T5) trainiert wird; und/oder
die KI-Prozedur mittels Eingabe einer Darstellung (D), der zugehörig aufgeteilten Teilbereiche (T1 - T5) und eines mittels einer, vorzugsweise kameragestützten, Sensorvorrichtung (30) erfassten Ergebnisses des Lasermarkierens der mehreren Teilbereiche (T1 - T5) auf das Objekt (12) trainiert wird.

15. System (10) zum Lasermarkieren von Objekten (12), wobei das System (10) aufweist:
eine Verarbeitungseinrichtung (32), die dazu konfiguriert ist, eine computergestützte Prozedur, vorzugsweise Algorithmus, auf eine bereitgestellte Darstellung (D) anzuwenden, der die Darstellung (D) in mehrere Teilbereiche (T1 - T5) aufteilt; und
mehrere Lasermarkierungsvorrichtungen (20), die dazu ausgebildet sind, die von der Verarbeitungseinrichtung (32) aufgeteilten mehreren Teilbereiche (T1 - T5) zu empfangen und auf das Objekt (12) zum Erzeugen der Darstellung (D) auf dem Objekt (12) zu lasermarkieren, wobei die mehreren Lasermarkierungsvorrichtungen (20) jeweils einen der mehreren Teilbereiche (T1 - T5) auf das Objekt (12) lasermarkieren und vorzugsweise empfangen; und optional
einen Objektförderer (14), der zum Fördern der Objekte (12) entlang der mehreren Lasermarkierungsvorrichtungen (20) angeordnet ist.
